Europäisches Patentamt

European Patent Office

Office européen des brevets

(11) Publication number: **0 495 307 A1**

## EUROPEAN PATENT APPLICATION

(21) Application number: **91311685.1**

(22) Date of filing: **17.12.91**

(51) Int. Cl.⁵: **C08G 18/79**, C09D 175/04, C09J 175/04

(30) Priority: **14.01.91 JP 69553/91**

(43) Date of publication of application:
**22.07.92 Bulletin 92/30**

(84) Designated Contracting States:
**DE FR GB**

(71) Applicant: **NIPPON POLYURETHANE INDUSTRY CO. LTD.**
**2-8, Toranomon 1-chome**
**Minato-ku Tokyo(JP)**

(72) Inventor: **Yoshida, Mitsuhiro**
**Takamura-danchi 15-604, 203, Takamura**
**Hiratsuka-shi, Kanagawa-ken(JP)**
Inventor: **Sarto, Susumu**
**422-14, Kariba-cho, Hodogaya-ku**
**Yokohama-shi, Kanagawa-ken(JP)**
Inventor: **Obuchi, Yukio**
**22-33, Gumisawa 7-chome**
**Totsuka-ku, Yokohama-shi(JP)**
Inventor: **Konishi, Shin**
**1893-8, Ebdo**
**Fujisawa-shi, Kanagawa-ken(JP)**
Inventor: **Shindo, Masanori**
**1017-4, Daigiri**
**Fujisawa-shi, Kanagawa-ken(JP)**

(74) Representative: **West, Alan Harry et al**
**R.G.C. Jenkins & Co. 26 Caxton Street**
**London SW1H 0RJ(GB)**

(54) **Polyisocyanate curing agent and coating and adhesive cmpositions containing it.**

(57) A curing agent for a two-component polyurethane has as its main constituent a hexamethylene diisocyanate-derived polyisocyanate having a viscosity below 1,400 mPa.s/25°C substantially free from monomeric hexamethylene diisocyanate and from solvent, and having an uretidine dione dimer content of greater than 10% and an isocyanurate cyclic trimer content of less than 60%.

This invention relates to polyurethane curing agents composed mainly of a hexamethylene diisocyanate type polyisocyanate which contains a uretidine dione dimer and an isocyanurate cyclic trimer. The invention relates also to coating and adhesive compositions containing such curing agents.

Coating materials and adhesives have found wide utility because of their ability to meet the requirements of material saving, low environmental pollution and safety. Coating materials and adhesives of the high solids-, powder- and aqueous-types and adhesives of the hot-melt type have become especially prominent. Particularly in the United States, high-solids types of coating materials and adhesives are being used to meet VOC (volatile organic compounds) regulations. In Japan, although the conversion to high-solids type materials has not yet occurred, the use of high-solids type coating materials and adhesives is being investigated by local government for reasons of environmental protection, for achieving improvements in conventional coating materials and for standardising product quality in the US and Japanese automobile industries.

In practice, coating materials need to be diluted with solvent to a viscosity required for application. When a high-viscosity varnish is involved, large amounts of solvent must be used for thinning, and this decreases the single coating thickness and necessitates repeated coating to attain a desired minimum coating film thickness and a minimum hiding power. Excessively rapid evaporation or poor evaporation of the solvent may cause pinhole formation in the coating film and running of the coating material, tending to give a poor finish.

One-component and two-component types of polyurethane coating materials and adhesives, which employ hexamethylene diisocyanate (hereinafter referred to as "HDI") type polyisocyanates as a curing agent, and an acrylic polyol or polyesterpolyol as the polyhydroxyl compound, have superior weatherability, chemical resistance and abrasion resistance, for example, and are used for exterior coating and adhesion-bonding in the automobile and construction industries. These high-solids type or low viscosity type polyurethane systems require substantial amounts of solvent for dilution to practical coating viscosities, and for the reasons mentioned above, the current trend is to reduce the dependence on such solvents.

Of the HDI type polyisocyanate curing agents, the polyisocyanurate type is described as having superior weatherability in "Polyurethane Resin Handbook", pp. 404-406, (published by Nikkan Kogyo Shimbun Ltd.). However, commercially available curing agents of this type have a high viscosity when substantially free from HDI monomer and solvent. For example, isocyanurated HDI (Coronate HX; isocyanate content: 21.3%; solids content: 100%; made by Nippon Polyurethane Industry Co.) has a viscosity of 2,400 mPa.s/25°C when it contains substantially no HDI monomer and no solvent. Even the lowest-viscosity isocyanurated HDI (Duranate TPA-100; isocyanate content: 23.1%; solids content: 100%; made by Asahi Chemical Industry Co., Ltd.) has a viscosity of 1,400 mPa.s/25°C.

In order to achieve a high-solids formulation for two-component type polyurethanes, the polyhydroxyl compound may be selected from high-solids types, i.e. low-viscosity or low-molecular weight types, of polyesterpolyol, alkyd polyol, epoxypolyol and acryl polyol, for example. However, in order to obtain a high-solids formulation as a total system, the curing agent also needs to be selected from those having both a lower molecular weight and a lower viscosity than conventional curing agents. The curing agent should include an isocyanurate ring in view of weatherability, but this type of curing agent has a lower molecular weight limit since it is derived from 3 moles of HDI, so that the viscosity cannot be lower than about 1,400 mPa.s/25°C.

The present invention is based on the observation that the incorporation of the uretidine dione structure which is of lower molecular weight than the isocyanurate structure, into the molecule in a large quantity results in a lower average molecular weight and a lower viscosity.

The present invention therefore provides an HDI-type curing agent which has a low viscosity and a high solids content.

The present invention provides more particularly a curing agent for a two-component polyurethane, comprising a hexamethylene diisocyanate-derived polyisocyanate having a viscosity below 1,400 mPa.s/25°C and being substantially free from monomeric hexamethylene diisocyanate and from solvent, and having an uretidine dione dimer content of greater than 10% and an isocyanurate cyclic trimer content of less than 60%.

The present invention also provides a polyurethane composition, which may be formulated as a coating composition or an adhesive composition, for example, containing a polyhydroxyl compound and such a curing agent, the molar ratio of isocyanate groups in the polyisocyanate to hydroxyl groups in the polyhydroxyl compound being from 9:1 to 1:9.

The uretidine dione dimer contents and the isocyanurate cyclic trimer contents of the curing agents can be determined from the percentages of the peak areas of a gel permeation chromatogram (hereinafter referred to as "GPC") using a differential refractometer as the detector.

The uretidine dione dimer has both a molecular weight and a viscosity which are lower than those of the isocyanurate cyclic trimer. An uretidine dione dimer content of 10% or less will not therefore give the low viscosity desired in the curing agents of the invention.

If the polyisocyanate has an uretidine dimer content greater than 10% but nevertheless has an isocyanurate cyclic trimer content of 60% or more, then the resulting polyisocyanate has an excessively high functionality. Consequently, coating films prepared from the polyisocyanate are rigid and brittle, resulting in poor adhesion and peeling, as illustrated by such properties as impact resistance, flexibility and the Erichsen test, as set out below in the Examples and Comparative Examples.

Brittleness alone can be improved by increasing the isocyanurate cyclic trimer content, the curing agent then having a higher molecular weight. Since the isocyanurate cyclic trimer has an inherently more rigid structure than the uretidine dione dimer, this necessarily results in a rigid coating film. However, because of the consequential higher molecular weight of the curing agent, the high solids content and the high build coating which are characteristics of the present invention cannot be attained.

The uretidine dione dimer has a lower functionality than the isocyanurate cyclic trimer and is included in the polyisocyanate curing agent in an amount of greater than 10%, preferably from 15 to 40%. As a result, the polyisocyanate has a viscosity of not greater than 1,400 mPa.s/25°C, preferably from 100 to 1,000 mPa.s/25°C, when substantially free from HDI monomer and solvent. Furthermore, the film obtained using such a curing agent is characteristically flexible.

The recent trend towards the widespread use of plastics, especially for automobile parts, is quite remarkable. Plastics generally have thermal expansion coefficients higher than those of metals. Therefore, if a plastics coating film is rigid, that film cannot adapt to the thermal changes of the base material, resulting in likely poor adhesion. In contrast, the polyurethane compositions of the invention form flexible films, having good adhesion strength, and are especially suitable for use as coating materials and adhesives for plastics. Attempts to lower the viscosity using an uretidine dione dimer content of less than 10% and an isocyanurate cyclic trimer content of 60% or more, as described in for example Japanese Laid-Open Patent Applications Nos. Sho 63-265970 and Hei 2-620, result in such practical disadvantages.

The uretidine linkage may be presumed to involve a problem in storage stability, from the fact that urethodione dissociates on heating to regenerate an isocyanate. Experimentally, however, the thermal dissociation temperature is about 150°C, and no change was observed in isocyanate content, viscosity, IR absorption spectrum or GPC peak pattern during storage for 7 months at room temperature, or for 3 months at 50°C. The statements contained in Japanese Laid-Open Patent Applications Nos. Sho 63-265970 and Hei 2-620, regarding storage stability are not appropriate.

The polyisocyanate curing agents of the invention contain isocyanurate cyclic trimer in an amount of less than 60%, preferably from 15% to 45% as determined by GPC analysis. The polyisocyanate contains the isocyanate group and the uretidine group in a ratio of from 0.2:1 to 0.7:1 determined from the ratio of the peak absorbance at 1690 cm$^{-1}$ for the isocyanurate group to the peak absorbance at 1770 cm$^{-1}$ for the urethodione group. As illustrated in the Examples below, based on those measurements, weatherability can be retained by the above-mentioned trimer contents.

As described above, the polyisocyanate curing agents of the invention have an uretidine structure effective in lowering the viscosity as well as an isocyanurate structure required for retaining weather resistance.

It is preferred to obtain the polyisocyanurate compounds of the invention, either though an uretidine structure or by isocyanuration occurring as a side reaction. However, for obtaining the low-viscosity polyisocyanate curing agents of the invention, the reaction must be stopped at an early stage. Therefore, when the intended product ratio has been attained, the reaction is stopped by, for example, addition of phosphoric acid or methyl p-toluenesulfonate, and the unreacted free HDI in the reaction mixture is removed to a residual content of not more than 0.5% by weight, for example, by extraction with n-hexane or by thin-film distillation under high vacuum (1 to 15 Pa) at a temperature of 120 to 140°C.

Catalysts effective for producing simultaneously both the uretidine dione dimer and the isocyanurate cyclic trimer include tri-ethylphosphine, dibutylethylphosphine, tri-n-propylphosphine, triisopropylphosphine, tri-n-butylphosphine, triisobutylphosphine, tri-tert-butylphosphine, triamylphosphine, trioctylphosphine, tribenzylphosphine and benzylmethylphosphine.

Usually the reaction is carried out in an inert solvent or solvent mixture conventionally used in polyurethane processing including aromatic solvents such as toluene, xylene and proprietary solvents such a SWAZOLE® and SOLVESSO®; ketone type solvents, for example as methyl ethyl ketone, methyl isobutyl ketone and cyclohexanone; ester type solvents, for example ethyl acetate, butyl acetate and isobutyl acetate; glycoletherester type solvents; for example ethylene glycol ethyl ether acetate, propylene glycol methyl ether acetate, 3-methyl-3-methoxybutyl acetate and ethyl 3-ethoxy-propionate; and ether type solvents, for example tetrahydrofuran and dioxane, thereby adjusting the viscosity according to the reaction conditions.

The reaction is usually carried out at a temperature of 50 to 90°C.

The polyhydroxyl compound employed in the coating and adhesive compositions of the invention is preferably a compound having two or more hydroxyl groups in the molecule. More specifically, the polyhydroxyl compounds include for example saturated and unsaturated polyester resins, polycaprolactone resins, saturated and unsaturated oil- or fatty acid-modified alkyd resins, aminoalkyd resins, polycarbonate resins, acrylic resins, polyether resins, epoxy resins, polyurethane resins, cellulose acetate-butyrate resins and fluorine-containing resins. Of these, particularly preferred are saturated and unsaturated polyester resins, saturated and unsaturated oil-modified and fatty acid-modified alkyd resins, and acrylic resins in view of their coating film properties such as gloss, fleshiness, hardness, flexibility and durability; workability such as drying properties and curing characteristics; and cost.

In the coating and adhesive compositions of the invention, the molar ratio of isocyanate groups in the polyisocyanate to hydroxyl groups in the polyhydroxyl compound ranges from 9:1 to 1:9 preferably from 6:4 to 4:6.

The coating and adhesive compositions of the invention may contain a conventional pigment or pigments and one or more other additives. The compositions can be applied by conventional coating methods, for example air-less spraying, air spraying, electrostatic spraying, immersion coating, roll coating and brushing.

The invention provides high-solids and non-solvent coating and adhesive compositions which are superior in weatherability, flexibility and other properties, by the combination of a curing agent containing a low viscosity polyisocyanate as the main component, and a polyhydroxyl compound. The compositions of the invention embody material saving and environmental pollution prevention, and further permit the formation of high build coatings in a single application in contrast to conventional coating materials and adhesives, thus eliminating the risks of pinholing and running. The composition of the invention can therefore be applied with advantage to a variety of articles to be coated such as metals, plastics, concrete and wood.

The present invention is described in more detail below by reference to the Examples and Comparative Examples. Throughout, the terms "parts" and "%" are all on a weight basis.

Example 1

3,000 parts of HDI (made by Nippon Polyurethane Industry Co.; isocyanate content: 49.9%; solids content: 100%) and 6.0 parts of trioctylphosphine as catalyst were charged to a reactor equipped with a stirrer, a thermometer and a cooler. The reaction mixture was heated to 50 - 60°C with stirring and the reaction was allowed to proceed while stirring at the same temperature for 8 hours. Then 1.9 parts of phosphoric acid were added to stop the reaction. There was obtained a pale yellow reaction liquid having an isocyanate content of 42.1%.

Unreacted HDI was removed by thin-film distillation at 120°C under a pressure of 1.3 Pa to obtain 900 parts of a pale yellow reaction product "A-1" which had an isocyanate content of 23.2% (remaining free HDI content: 0.2% as measured by gas chromatography), an uretidine dione dimer content of 32% and an isocyanurate cyclic trimer content of 44% by GPC analysis, and a viscosity of 100 mPa.s/25°C.

Coating composition

282.0 parts of titanium white were added to 364.2 parts of acryl-polyol (J-500 made by Johnson Co.; hydroxyl value: 112; solids content: 80%), the pigment content of the final coating composition being 40% (hereinafter pigment weight being referred to as "PWC"). Subsequently, 222.2 parts of a mixed solvent of equal parts of toluene/ethyl acetate/butyl acetate/cellosolve acetate were added thereto so that the coating viscosity at 20°C of the final coating composition was 25 seconds/Ford cup No. 4. (The above solvent is hereinafter referred to as "D/D solvent"). The pigment was dispersed in the mixture with a predetermined amount of glass beads by means of a shaker to obtain a liquid dispersion.

The glass beads were removed from the liquid dispersion. To 400 parts of the resulting dispersion, 60.6 parts of the composition "A-1" prepared above were added to obtain a coating composition. This coating composition had a coating solids content of 70.5%.

Test of coating film

4

The coating composition prepared above was applied to a steel panel (JIS G3141 <SPCC-SB>, specification: PF-1077, made by Nippon Test Panel Kogyo K.K., hereinafter referred to as "bonderized steel panel") degreased using trichloroethylene, and the applied coating was left standing at 20°C and 65%RH for one week to form a coating film 40 - 50μm dry thickness.

The properties of the coating film were evaluated by the test methods below. The results of the test are shown in Table 1.

| | |
|---|---|
| Adherence: | Cross cut tape test of JIS 5400, |
| Impact strength: | 12.7 mm, 1 Kg, |
| Chemical resistance: | 20°C, 24 hours, |
| Water resistance: | 20°C, 24 hours, |
| Stain resistance: | JIS 5400 |
| Weatherability: | Shown by gloss retention ratio |

(%) and discoloration degree (ΔE) in 2000 hour test according to JIS 5400 under conditions of black panel temperature of 63±3°C and spray time of 18 minutes per 120 minutes with a Sunshine Weather-o-meter (made by Suga Shikenki K.K.).

Example 2

3,000 parts of HDI (made by Nippon Polyurethane Industry Co.; isocyanate content: 49.9%; solids content: 100%) and 6.0 parts of tributylphosphine as catalyst were charged to a reactor equipped with a stirrer, a thermometer and a cooler. The reaction mixture was heated to 50 - 60°C with stirring, and the reaction was allowed to proceed while stirring at the same temperature for 23 hours. Then 3.5 parts of phosphoric acid were added to stop the reaction. There was obtained a pale yellow reaction solution having an isocyanate content of 30.3%.

Unreacted HDI was removed by thin-film distillation at 120°C under a pressure of 1.3 Pa to obtain 1,800 parts of a pale yellow reaction product "A-2" which had an isocyanate content of 18.7% (remaining free HDI content: 0.3% as measured by gas chromatography), an uretidine dione dimer content of 18% and an isocyanurate cyclic trimer content of 20% by GPC analysis, and a viscosity of 580 mPa.s/25°C.

Coating composition

273.2 parts of titanium white were added to 406.5 parts of acryl-polyol (Hitachiloid 3083-70B made by Hitachi Chemical Co., Ltd.; hydroxyl value: 70; solids content: 70%), the PWC in the final coating composition being 40% by weight. Subsequently, 195.1 parts of the D/D solvent were added so that the coating viscosity at 20°C of the final coating composition was 25 seconds/Ford cup No. 4. The pigment was dispersed in the mixture with a predetermined amount of glass beads by means of a shaker to obtain a liquid dispersion.

The glass beads were removed from the dispersion. To 400 parts of the resulting dispersion, 57.3 parts of the composition "A-2" prepared above were added to obtain a coating composition. This coating composition had a coating solids content of 68.3%.

Test of coating film

The coating composition prepared above was applied to a bonderized steel panel degreased using tri-chloroethylene, and the applied coating was left standing at 20°C and 65%RH for one week to form a coating film 40 - 50μm dry thickness.

The properties of the coating film were evaluated in the same manner as described in Example 1. The results of the test are shown in Table 1.

Example 3

2,987.4 parts of HDI (made by Nippon Polyurethane Industry Co.; isocyanate content: 49.9%; solids content: 100%) and 12.6 parts of 1,3-butanediol were charged to a reactor equipped with a stirrer, a thermometer, and a cooler. The reaction mixture was heated to 60 - 70°C with stirring and the reaction was allowed to proceed at the same temperature for 3 hours while stirring to obtain a pale yellow reaction liquid having an isocyanate content of 49.3%. To this reaction liquid, 6.0 parts of triamylphosphine were added, and the reaction was allowed to proceed while stirring at 50 - 60°C for 25 hours. Then 5.5 parts of methyl p-toluenesulfonate was added to stop the reaction to obtain a pale yellow reaction liquid having an isocyanate content of 30.3%.

Unreacted HDI was removed by thin film distillation at 140°C under a pressure of 1.3 Pa to obtain 1,650 parts of pale yellow reaction product "A-3" having an isocyanate content of 18.7% (remaining free HDI content: 0.1% as measured by gas chromatography), an uretidine dione dimer content of 20% and an isocyanurate cyclic trimer content of 20% by GPC analysis, and a viscosity of 750 mPa.s/25°C.

Coating composition

274.8 parts of titanium white were added to 268.8 parts of polyesterpolyol (Nippolan 800-75E made by Nippon Polyurethane Industry Co.; hydroxyl value: 217.5; solids content: 75%), the PWC content of the final coating composition being 40% by weight. Subsequently, 245.8 parts of the D/D solvent were added so that the coating viscosity at 20°C of the final coating composition was 25 seconds/Ford cup No. 4. The pigment was dispersed in the mixture with a predetermined amount of glass beads by means of a shaker to obtain a liquid dispersion.

The glass beads were removed from the liquid dispersion. To 400 parts of the resulting dispersion, 106.7 parts of the composition "A-3" prepared above were added to obtain a coating composition. This coating composition had a coating solids content of 68.7%.

Test of coating film

The coating composition prepared as above was applied to a bonderized steel panel degreased using trichloroethylene, and the applied coating was left standing at 20°C and 65%RH for one week to form a coating film 40 - 50µm dry thickness.

The properties of the coating film were evaluated in the same manner as described in Example 1. The results of the test are shown in Table 1.

Example 4

A composition (varnish) was prepared in the manner described in Example 1 without using titanium white. The varnish was tested for adhesiveness as described below.

Polyurethane RIM molded sheets (RIM: reactive injection molding), FRP sheets, ABS sheets, and bonderized steel panels each having a thickness of 3 mm were degreased with trichloroethylene. Onto the sheets, the above composition (varnish) was applied to give a dry thickness of 40 - 50µm. The varnish was preliminarily dried at 50°C for 5 minutes to evaporate the solvent in the coating film. Then the same kind of the sheets in each case was superposed with care so as to exclude air bubbles, and maintained under a contact pressure of 25 kg/cm² and under the conditions described in Example 1.

The samples were cut into pieces having a width of 25 mm, and the adhesive strength (for peeling) was measured for respective samples at a tensile rate of 100 mm/min using a Tensilon UTM-500 made by Orientic K.K. according to JIS K6854. The results are shown in Table 3.

Comparative Example 1

3,000 parts of HDI (made by Nippon Polyurethane Industry Co.; isocyanate content: 49.9%; solids content: 100%) and 0.3 parts of tetramethylammonium hydroxide as the catalyst were charged to a reactor equipped with a stirrer, a thermometer and a cooler. The reaction mixture was heated to 50 - 60°C with stirring, and the reaction was allowed to proceed while stirring at the same temperature for 4 hours. When the isocyanate content reached 46.3%, 0.2 part of phosphoric acid was added to stop the reaction to obtain a pale yellow reaction liquid.

Unreacted HDI was removed by thin film distillation at 150°C under a pressure of 1.3 Pa to obtain 600 parts of a pale yellow reaction product "B-1" having an isocyanate content of 23.5% (remaining free HDI content: 0.1% as measured by gas chromatography), an isocyanurate cyclic trimer content of 71% and a uretidine dione dimer content of 1% by GPC analysis, and a viscosity of 1,600 mPa.s/25°C.

Coating composition

217.2 parts of titanium white were added to 494.2 parts of acryl-polyol (Acrydic A-801 made by Dainippon Ink and Chemicals, Inc.; hydroxyl value: 50; solids content: 50%), the PWC content of the final coating composition being 40% by weight. Subsequently, 209.9 parts of the D/D solvent were added so that the coating viscosity at 20°C of the final coating composition was 25 seconds/Ford cup No. 4. The pigment was dispersed in the mixture with a predetermined amount of glass beads by means of a shaker to obtain a liquid dispersion.

The glass beads were removed from the liquid dispersion. To 400 parts of the resulting dispersion 34.2 parts of the composition "B-1" prepared above were added to obtain a coating composition. This coating composition had a coating solids content of 54.3%.

Test of coating film

The coating composition prepared above was applied to a bonderized steel panel degreased using trichloroethylene, and the applied coating was left standing at 20°C and 65%RH for one week to form a coating film 40 - 50$\mu$m dry thickness.

The properties of the resulting coating film were evaluated in the manner described in Example 1. The test results are shown in Table 2.

Comparative Example 2

3,000 parts of HDI (made by Nippon Polyurethane Industry Co.; isocyanate content: 49.9%; solids content: 100%) and 0.3 parts of tetramethylammonium hydroxide as catalyst were charged to a reactor equipped with a stirrer, a thermometer and a cooler. The reaction mixture was heated to 50 - 60°C with stirring, and the reaction was allowed to proceed while stirring at the same temperature for 8 hours. When the isocyanate content reached 42.3%, 0.2 part of phosphoric acid was added to stop the reaction to obtain a pale yellow reaction liquid.

Unreacted HDI was removed by thin film distillation at 150°C under a pressure of 1.3 Pa to obtain 1,020 parts of pale yellow reaction product "B-2" having an isocyanate content of 20.9% (remaining free HDI content: 0.1% as measured by gas chromatography), an isocyanurate cyclic trimer content of 46% and a uretidine dione dimer content of 0.3% by GPC analysis, and a viscosity of 2,800 mPa.s/25°C.

Coating composition

252.4 parts of titanium white were added to 388.0 parts of acryl-polyol (Hitachiloid 3083-70B made by Hitachi Chemicals Co., Ltd.; hydroxyl value: 70; solid content: 70%), the PWC in the final coating composition being 40% by weight. Subsequently, 252.6 parts of the D/D solvent were added so that the coating viscosity at 20°C of the final coating composition was 25 seconds/Ford cup No. 4. The pigment was dispersed in the mixture with a predetermined amount of glass beads by means of a shaker to obtain a liquid dispersion.

The glass beads were removed from the liquid dispersion. To 400 parts of the resulting dispersion 47.9 parts of the composition "B-2" prepared above were added to obtain a coating composition. This coating composition had a coating solids content of 63.1%.

Test of coating film

The coating composition prepared above was applied to a bonderized steel panel degreased using trichloroethylene, and the applied matter was left standing at 20°C and 65%RH for one week to form a coating film 40 - 50$\mu$m dry thickness.

The properties of the coating film were evaluated in the manner described in Example 1. The result of the test are shown in Table 2.

Comparative Example 3

2,987.4 parts of HDI (made by Nippon Polyurethane Industry Co.; isocyanate content: 49.9%; solids content: 100%) and 12.6 parts of 1,3-butanediol were charged to a reactor equipped with a stirrer, a thermometer and a cooler. The reaction mixture was heated to 60 - 70°C with stirring, and the reaction was allowed to proceed at the same temperature for 3 hours while stirring to obtain a pale yellow reaction liquid having an isocyanate content of 49.3%. To this reaction liquid, 0.3 part of tetramethylammonium acetate was added, and the reaction mixture was heated to 50 - 60°C while stirring, and the reaction was allowed to proceed while stirring at the same temperature for 12 hours. When the isocyanate content reached 40.5%, 0.2 part of the phosphoric acid was added to stop the reaction to obtain a pale yellow reaction liquid.

Unreacted HDI was removed by thin film distillation at 130°C under a pressure of 2.6 Pa to obtain 1,400 parts of a pale yellow reaction product "B-3" having an isocyanate content of 20.2% (remaining free HDI content: 0.2% as measured by gas chromatography), an isocyanurate cyclic trimer content of 40% and a uretidine dione dimer content of 0.2% by GPC analysis, and a viscosity of 4,100 mPa.s/25°C,

Coating composition

253.6 parts of titanium white were added to 257.8 parts of polyesterpolyol (Nippolan 800-75E; hydroxyl value: 217; solids content: 75%), the PWC content of the final coating composition being 40% by weight. Subsequently, 301.5 parts of the D/D solvent were added so that the coating viscosity at 20°C of the final coating composition was 25 seconds/Ford cup No. 4. The pigment was dispersed in the mixture with a predetermined amount of glass beads by means of a shaker to obtain a liquid dispersion.

The glass beads were removed from the liquid dispersion. To 400 parts of the resulting dispersion, 92.0 parts of the composition "B-3" prepared above were added to obtain a coating composition. This coating composition had a coating solids content of 63.4%.

Test of coating film

The coating composition prepared above was applied to a bonderized steel panel degreased using trichloroethylene, and the applied coating was left standing at 20°C and 65%RH for one week to form a coating film 40 - 50μm dry thickness.

The properties of the resulting coating film were evaluated in the manner described in Example 1. The results of the test are shown in Table 2.

Comparative Example 4

A composition (varnish) was prepared in the manner described in Comparative Example 1 without using titanium white. The varnish was tested for adhesiveness under the conditions described in Example 4. The results are shown in Table 3.

Table 1:  Properties of Coating Film of Examples

| | Example | | |
| --- | --- | --- | --- |
| | 1 | 2 | 3 |
| Coating solid content (%) by weight) | 70.5 | 68.3 | 68.7 |
| Appearance | Good | Good | Good |
| Gloss | 91 | 90 | 86 |
| Pencil hardness | H | H | HB |
| Adherence | 10 | 10 | 10 |
| Flex property | Good | Good | Good |
| Erichsen test | 9.6 | 9.7 | 9.7 |
| Impact strength:  front side | 40 | 50 | 95 |
|                        back side | 30 | 40 | 100 |
| Chemical resistance:  10%HCl | Good | Good | Good |
|                          10%NaOH | Good | Good | Good |
| Water resistance | Good | Good | Good |
| Stain resistance: | | | |
|     Marking ink, black | Good | Good | Good |
|     Marking ink, red | Good | Good | Good |
|     Shoe polish, black | Good | Good | Good |
|     Shoe polish, red | Good | Good | Good |
|     Lipstick, red | Good | Good | Good |
| Weatherability: | | | |
|     Gloss retention rate(%) | 83 | 86 | 78 |
|     $\Delta E$ | 1.0 | 0.9 | 1.8 |

9

Table 2: Properties of Coating Film

|  | Comparative example | | |
|---|---|---|---|
|  | 1 | 2 | 3 |
| Coating solid content (% by weight) | 54.3 | 63.1 | 63.4 |
| Appearance | Good | Good | Poor |
| Gloss | 91 | 91 | Poor(52) |
| Pencil hardness | H | H | H |
| Adherence | 0 | 4 | 6 |
| Flex property | Fail. | Fail. | Good |
| Erichsen test | 6.8 | 6.4 | 9.2 |
| Impact strength: front side | Fail.(5) | Fail.(15) | 80 |
| back side | Fail.(0) | Fail.(10) | 70 |
| Chemical resistance: 10%HCl | Good | Good | Good |
| 10%NaOH | Good | Good | Good |
| Water resistance | Good | Good | Good |
| Stain resistance: | | | |
| Marking ink, black | Good | Good | Fail. |
| Marking ink, red | Good | Good | Good |
| Shoe polish, black | Good | Good | Fail. |
| Shoe polish, red | Good | Good | Good |
| Lipstick, red | Good | Good | Good |
| Weatherability: | | | |
| Gloss retention rate (%) | 85 | 84 | 66 |
| $\Delta E$ | 0.9 | 1.0 | 2.3 |

Table 3:  Adhesive Strength

(Unit:kg/25mm)

|  | Example 4 | Comparative example 4 |
|---|---|---|
| RIM | 32/A | 19/B |
| FRP | 46/A | 26/B |
| ABS | 33/A | 17/B |
| Bonderized steel panel | 41/B | 18/B |

A:  Substrate failure

B:  Cohesive failure

**Claims**

1. A curing agent for a two-component polyurethane, comprising a hexamethylene diisocyanate-derived polyisocyanate having a viscosity below 1,400 mPa.s/25°C and being substantially free from monomeric hexamethylene diisocyanate and from solvent, and having an uretidine dione dimer content of greater than 10% and an isocyanurate cyclic trimer content of less than 60%.

2. A curing agent according to claim 1, wherein the polyisocyanate has an uretidine dione dimer content of 15 to 40%.

3. A curing agent according to claim 1 or claim 2, wherein the polyisocyanate has an isocyanurate cyclic trimer content of 15 to 45%.

4. A polyurethane composition, containing a polyhydroxyl compound and a curing agent according to any one of claims 1 to 3, the molar ratio of isocyanate groups in the polyisocyanate of the curing agent to hydroxyl groups in the polyhydroxyl compound being from 9:1 to 1:9.

5. A composition according to claim 4, wherein the molar ratio of isocyanate groups to hydroxyl groups is from 6:4 to 4:6.

6. A composition according to claim 4 or claim 5, in the form of a coating composition.

7. A composition according to claim 4 or claim 5, in the form of adhesive composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 337 116 (BAYER)<br>* claims 1,3,4 *<br>* page 4, line 31 - line 54 *<br>* example 1 *<br>--- | 1,3-6 | C08G18/79<br>C09D175/04<br>C09J175/04 |
| X | FR-A-2 216 333 (BAYER)<br>* claims 1,4,5 *<br>* page 4, line 17 - line 33 *<br>--- | 1-6 | |
| X | EP-A-0 178 520 (BAYER)<br>* claims 1,3-10 *<br>* page 21, line 18 - line 29 *<br>* example 1 *<br>--- | 1 | |
| A | GB-A-2 203 159 (ASAHI KASEI)<br>* claims 1,2,6,12 *<br>* page 20, line 2 - line 16 * | 1 | |
| D | & JP-A-63 265 970 (...)<br><br>----- | | |

**TECHNICAL FIELDS SEARCHED (Int. Cl.5)**

C08G
C07D

The present search report has been drawn up for all claims

| Place of search | Date of completion of the search | Examiner |
|---|---|---|
| THE HAGUE | 19 MAY 1992 | VAN PUYMBROECK M. A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)